# EUROPÄISCHE PATENTSCHRIFT

(11) **EP 1 994 303 B1**
(45) Veröffentlichungstag und Bekanntmachung des Hinweises auf die Patenterteilung: **02.09.2009**
(21) Anmeldenummer: 08716631.0
(22) Anmeldetag: 19.03.2008
(51) Int. Cl.: F16D 65/12

(54) **BREMSSCHEIBE, INSBESONDERE FÜR MAGNETBREMSEN**
BRAKE DISK, PARTICULARLY FOR MAGNETIC BRAKING
DISQUE DE FREIN, EN PARTICULIER POUR FREINS MAGNÉTIQUES

(30) Priorität: 20.03.2007 DE 102007013401
(43) Veröffentlichungstag der Anmeldung: 26.11.2008
(73) Patentinhaber: Rex Industrie-Produkte Graf von Rex GmbH, 74541 Vellberg (DE)
(72) Erfinder: ROSA, Wilhelm, 74423 Obersontheim-Mittelfischach (DE); HENSE, Ulrich, 86899 Landsberg/Lech (DE)
(74) Vertreter: Wagner, Bernhard Peter
(86) Internationale Anmeldenummer: PCT/EP2008/002210
(87) Internationale Veröffentlichungsnummer: WO 2008/113581

(56) Entgegenhaltungen:
- EP-A- 0 578 927
- GB-A- 2 184 387
- US-A- 3 891 066

## Beschreibung

Die vorliegende Erfindung betrifft eine Bremsscheibe, und insbesondere eine Bremsscheibe, die für Magnetbremsen geeignet ist, die in Fahrzeugen, beispielsweise als Notstopp-Bremse oder dynamische Bremse verwendet werden soll.

Bremsscheiben herkömmlicher Fahrzeugscheibenbremsen bestehen üblicherweise aus Metall und sind in geeigneter Weise drehfest mit dem jeweiligen zu bremsenden Rad verbunden. Zum Bremsen wird eine derartige Bremsscheibe dann zwischen zwei Reibbelegen je nach der gewünschten Bremswirkung mehr oder weniger stark eingeklemmt, die stationär am Fahrzeug angebracht sind.

Aus der DE 60 2005 000 056 T2 ist eine Bremsscheibe für Schienenfahrzeuge bekannt, die eine mit einer Tragplatte versehene Nabe aufweist. Auf der Tragplatte sind zwei Bremsreibungsplatten kranzförmig angeordnet die die eigentlichen Kontaktreibungsflächen bilden. Die Bremsreibungsplatten sind mit geeigneten Verbindungselementen, wie zum Beispiel Schraubbolzen mit der Tragplatte verbunden.

Aus der DE 103 58 320 A1 sind bereits Reibkörper bekannt, die im Allgemeinen einen Träger oder eine Trägerplatte und mindestens einen darauf angeordneten Reibbelag aufweisen. Dabei bestehen sowohl der Träger als auch der mindestens eine darauf angeordnete Reibbelag aus ausgehärteten Reibmaterialien auf der Grundlage von Verstärkungsfasern, hitzehärtbaren Bindemitteln und herkömmlichen Füllstoffen, so dass der Reibkörper einstückig ausgebildet ist. Derartige Reibkörper lassen sich als Brems-, Kupplungs- oder andere Reibbeläge einsetzten.

Aus der DE 197 52 543 A1 ist eine bistabil ausgebildete Magnetbremse bekannt, bei der eine drehfest im Magnetbremsengehäuse angeordnete Ankerscheibe mit einem fest darauf angebrachten ringscheibenförmigen Bremsbelag versehen ist. Auf einer zu bremsenden oder festzustellenden Welle eines Antriebs ist drehfest eine Brems- oder Kupplungsscheibe aufgepresst. Zum Bremsen oder Feststellen des Antriebs wird der Anker der Magnetbremse gegen die Kupplungsscheibe gedrückt, so dass der Antrieb durch den Reibschluss zwischen dem drehfest angeordneten ringförmigen Bremsbelag auf der Ankerscheibe und der Kupplungsscheibe gebremst und festgestellt wird.

Aus der DE 10 2005 006 699 A1 ist eine elektromagnetische Bremse mit einem Permanentmagneten bekannt, die als Notstopp-Bremse oder dynamische Bremse für einen Antrieb, beispielsweise einen Elektroantrieb für ein Fahrzeugrad einsetzbar ist. Diese bekannte Magnetbremse weist einen Bremsenkörper mit einem Permanentmagneten auf, der über ein Lagerschild drehfest am Ständer oder Gehäuse des Antriebs gehalten ist. Ein Anker der Magnetbremse ist über eine mit einem Flansch versehene Hülse drehfest auf einer zu bremsenden Welle des Antriebs so angeordnet, dass er axial zwischen einer Bremsstellung und einer Freigabestellung verschiebbar ist.

Das Bremsen des Antriebs erfolgt durch einen Reibschluss zwischen dem Anker und einer entsprechenden Stirnfläche des Bremsenkörpers. Insbesondere wenn diese bekannte Magnetbremse als Notstopp-Bremse oder dynamische Bremse verwendet werden soll, ist es zweckmäßig, den Bremsenkörper im Bereich seiner Stirnfläche mit einem Bremsbelag zu versehen, um den Reibschluss zwischen Bremsenkörper und Anker zu erhöhen. Hierbei bildet also der Anker zusammen mit der einen Flansch aufweisenden Hülse eine drehfest auf der zu bremsenden Welle angeordnete Bremsscheibe die gegen den beziehungsweise gegen die der Bremsbelag auf dem Bremsenkörper gedrückt wird.

Die US 3,891,066 A zeigt eine Bremsscheibe mit einem ringförmigen Reibkörper, der an seinem Außenumfang Kerben mit abgeschrägten Wänden aufweist. In diese Kerben sind trapezförmige Antriebselemente aus Metall eingesetzt, die mit am Außenumfang des Bremsscheibenkörpers konzentrisch dazu vorgesehenen Halteringen vernietet sind. Die Antriebselemente sind ihrerseits mit Kerben versehen, in die an einem Rad vorgesehene Keile oder Federn zur drehfesten Verbindung mit dem Rad eingreifen.

Der Erfindung liegt die Aufgabe zugrunde, eine Bremsscheibe für eine elektromagnetische Bremse, die insbesondere als Notstopp-Bremse und/oder dynamische Bremse einsetzbar ist, bereitzustellen, die bei geringer Masse eine große Aktuationskraft zwischen den Reibpartnern aufgrund eines eingeschalteten Magnetfeldes sicher stellt.

Diese Aufgabe wird durch die Bremsscheibe nach Anspruch 1 gelöst. Vorteilhafte Ausgestaltungen und Weiterbildungen der Erfindung sind in den Unteransprüchen beschrieben.

Die erfindungsgemäße Bremsscheibe weist also einen kreisscheibenförmigen Träger aus Reibmaterial mit einer zentralen Durchgangsöffnung auf, an dem konzentrisch dazu ein Metallring angeordnet ist, der Metallring in den Träger eingepresst ist.

Die Erfindung löst sich also von dem bei Magnetbremsen üblichen Prinzip, einen metallischen Anker oder eine metallische Bremsscheibe einzusetzen und gegebenenfalls zwischen dem Anker und der entsprechenden Gegenreibfläche Reibmaterialien zur Erhöhung des Reibwiderstandes einzufügen, und verwendet statt dessen einen Träger aus Reibmaterial mit einem Metallring, der infolge dessen auf seine Funktion als Anker reduziert werden kann, um ein optimales Verhältnis zwischen Masse der Bremsscheibe und magnetischer Anziehungskraft zwischen Anker und Magnetbremsenkörper zu erzielen.

Darüber hinaus weist die erfindungsgemäße Bremsscheibe aufgrund der Verwendung eines Trägers aus Reibmaterial ein sehr gutes Dampfungsverhalten gegenüber Schwingungen auf, wodurch auch unnötige Geräusche vermieden werden können.

Bereits durch das insbesondere formflüssige Einpressen des Metallrings in den Träger aus Reibmaterial lässt sich eine sehr gute Verbindung der beiden Materialien miteinander erreichen, so dass die erfindungsgemäße Bremsscheibe auch bei der Übertragung der erforderlichen Bremskräfte inklusive Kraftimpulsspitzen hohe Standzeiten erreicht.

Es ist jedoch auch möglich, dass der Metallring stoffschlüssig am Träger gehalten ist.

Ferner ist es möglich, die Befestigung des Metallrings am Träger durch den Einsatz eines Haftvermittlers weiter zu verbessern.

Bei geeigneter Wahl der Mittel zur Halterung des Metallrings am Träger in Abhängigkeit von Einsatzgebiet und Größe der Bremsscheibe, kann die Standzeit der erfindungsgemäßen Bremse bei hoher Lastwechselfestigkeit so verbessert werden, dass die Bremse über mindestens 10 Millionen Schaltzyklen ohne Ausfall der Bremsscheibe arbeitet.

Um insbesondere den Formschluss zwischen dem Metallring und dem Träger aus Reibmaterial zur Aufnahme von in der Scheibenebene auftretenden Scherkräften beim Bremsen weiter zu verbessern, ist erfindungsgemäß vorgesehen, dass der Metallring an seinem Innenumfang einen oder mehrere radial nach Innen gerichtete Mitnehmerfortsätze aufweist, wobei vorzugsweise der oder die Mitnehmerfortsätze zur Optimierung des Kraftflusses in der Draufsicht erweiterte Spitzen aufweisen.

Obwohl eine Vielzahl von verschiedensten Formen zur Verbesserung der Krafteinleitung möglich sind, ist es bevorzugt, dass die erweiterten Spitzen der Mitnehmerfortsätze in der Draufsicht tropfenförmig, kreisförmig, elliptisch oder polygonal sind.

Bei einer anderen Ausgestaltung der Erfindung ist vorgesehen, dass der Metallring aus zumindest einem Innenring und einem Außenring besteht, die über einen oder mehrere Stege miteinander verbunden sind.

Zweckmäßigerweise wird der Metallring der erfindungsgemäßen Bremsscheibe, der die Funktion eines Ankers einer Magnetbremse übernimmt, entsprechend der Lage der Magnetpole der Magnetbremse gestaltet. Um die Krafteinleitung und Kraftübertragung beim Lastwechsel und beim Bremsen weiter zu optimieren, ist bei einer besonders vorteilhaften Ausgestaltung der Erfindung vorgesehen, dass die Mitnehmerfortsätze oder die Stege umfangsmäßig gleichmäßig verteilt angeordnet sind.

Obwohl es grundsätzlich denkbar ist, für den Metallring Jedes ferromagnetische Metall einzusetzen, hat es sich gezeigt, dass ein Metallring aus magnetisierbarem Stahlblech die Anforderungen an die Bremsscheibe in einer Magnetbremse bestens erfüllt.

Um die Übertragung der Bremskräfte zwischen dem fest stehenden Bremsenkörper der Magnetbremse und einer zu bremsenden Welle zu optimierten, ist zweckmäßigerweise vorgesehen, dass der kreisscheibenförmige Träger aus Reibmaterial einen zentralen Nabenabschnitt mit einer konzentrischen Durchgangsöffnung zur Aufnahme einer zu bremsenden Welle und einen den Nabenabschnitt konzentrisch umgebenden Flanschabschnitt mit zumindest einer Reibfläche aufweist, wobei der Nabenabschnitt eine axiale Dicke aufweist, die gleich der Dicke des Flanschabschnitts ist, oder die größer als dessen Dicke ist.

Um eine optimale Drehfestigkeit zwischen Bremsscheibe und bremsender Welle zu erzielen, ohne eine leicht gängige Axialverschiebbarkeit der Bremsscheibe zum schnellen Aktivieren der Bremse zu beeinträchtigen, ist es zweckmäßig, wenn die Innenumfangsfläche der Durchgangsöffnung im Nabenabschnitt mit Mitnahmemitteln zur drehfesten Lagerung auf einer zu bremsenden Welle versehen ist.

Grundsätzlich ist es denkbar, dass die Durchgangsöffnung des Nabenabschnitts jede beliebige unrunde Form - Dreikant, Vierkant, Abplattung mit axialer Nut oder dergleichen - aufweist, die mit dem Außenumfang der zu bremsenden Welle korrespondiert und für eine drehfeste Lagerung geeignet ist. Vorteilhafterweise ist jedoch vorgesehen, dass die Mitnahmemittel von einer Verzahnung zur Aufnahme einer Wellenverzahnung auf der zu bremsenden Welle gebildet sind. Bevorzugt weist also die Innenumfangsfläche der Durchgangsöffnung im Nabenabschnitt eine Verzahnung zur Aufnahme einer Wellenverzahnung der zu bremsenden Welle auf.

Obwohl es grundsätzlich möglich ist, die erfindungsgemäße Bremsscheibe mit einer glatten, also ununterbrochenen Reiboberfläche zu versehen, ist es bei einer vorteilhaften Ausgestaltung der Erfindung vorgesehen, dass am Flanschabschnitt zwei oder mehr axial über die Oberfläche des Metallrings segmentartig vorstehende Reibflächen vorgesehen sind, wobei die Anzahl der segmentartigen Reibflächen der Anzahl der Mitnehmer oder Stege des Metallrings entspricht. Die Aufteilung der Reiboberfläche in Reibflächenelemente, die vorzugsweise der Anzahl der Mitnehmer oder Stege des Metallrings entsprechen, führt zu einer weiteren Geräuschverminderung.

Um die hohen Anforderungen an Reibwert, Verschleiß, Temperaturverhalten, usw. an eine Bremsscheibe einer Magnetbremse zu erfüllen, die als Notstopp-Bremse und/oder dynamische Bremse in Fahrzeugen, insbesondere in Pkws eingesetzt werden soll, ist es erforderlich, dass der Träger aus einem Fasergefüllten, hochfestem Reibmaterial hergestellt ist.

Die Erfindung wird im Folgenden beispielsweise anhand von in der Zeichnung dargestellten Ausführungsbeispielen beschrieben. Es zeigen:
Figur 1a eine Draufsicht auf eine erfindungsgemäße Bremsscheibe;
Figur 1b einen Schnitt durch eine erfindungsgemäße Bremsscheibe im Wesentlichen nach Linie Ib - Ib in Figur 1a;
Figur 2 eine Draufsicht auf einen Metallring für eine erfindungsgemäße Bremsscheibe;
Figur 3 eine stark vereinfachte schematische Schnittdarstellung einer an einem Antrieb angeordneten Magnetbremse mit einer erfindungsgemäßen Bremsscheibe;
Figur 4a eine Draufsicht auf eine andere Ausführungsform einer erfindungsgemäßen Bremsscheibe; und
Figur 4b einen Schnitt durch eine erfindungsgemäße Bremsscheibe 9 im Wesentlichen nach Linie IVb - IVb in Figur 4a.

In den verschiedenen Figuren der Zeichnung sind einander entsprechende Bauteile mit gleichen Bezugszeichen.versehen.

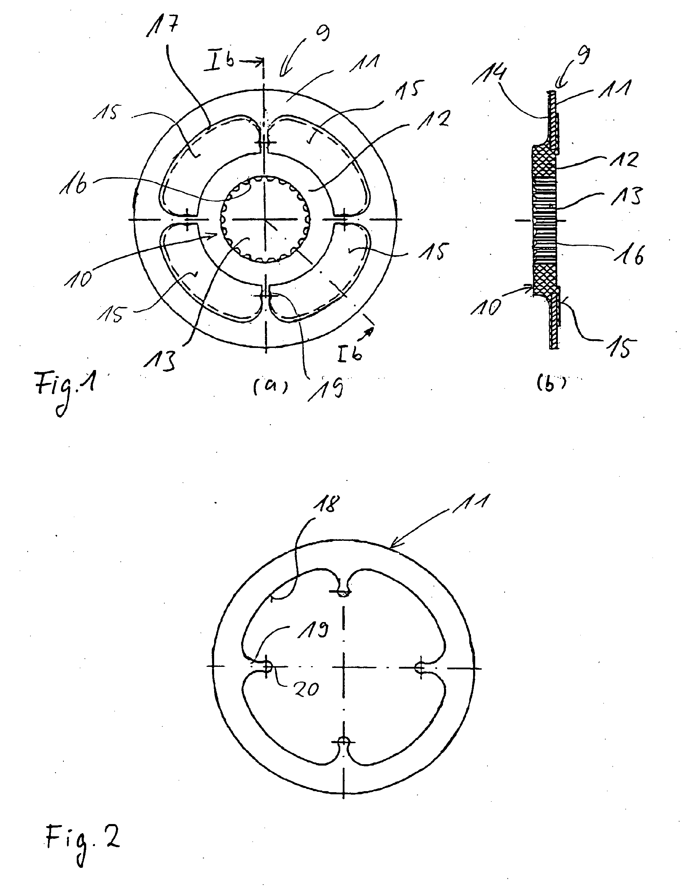

Wie in Figur 1 dargestellt ist, weist die erfindungsgemäße Bremsscheibe 9 einen Träger 10 aus Reibmaterial und einen Metallring 11 auf. Der Träger 10 ist in Form einer Kreisscheibe ausgebildet und umfasst einen zentralen Nabenabschnitt 12 mit einer zum Außenumfang des Trägers 10 konzentrisch angeordneten Durchgangsöffnung 13 und einen den Nabenabschnitt 12 konzentrisch umgebenden ringförmigen Flanschabschnitt 14, in dessen Bereich zumindest eine Reibfläche 15 vorgesehen ist.

Der Nabenabschnitt 12 weist beim dargestellten Ausführungsbeispiel in Axialrichtung der Durchgangsöffnung 13 eine Dicke auf, die etwa 2 bis 3 mal so groß ist, wie die Dicke der Bremsscheibe 9 im Bereich des Flanschabschnitts 14. Bei einer dargestellten Ausführungsform liegt die Dicke des Nabenabschnitts im Bereich von etwa 3 bis 10 mm, insbesondere von etwa 6,5 bis 7 mm, während die Dicke des Flanschabschnitts 14 zwischen 1,5 und 4 mm, und insbesondere bei etwa 2,5 mm liegt. Es ist aber auch möglich die Dicke des Nabenabschnitts und des Flanschabschnitts gleich zu wählen, ohne dadurch die Funktionsfähigkeit der Bremsscheibe 9 zu beeinträchtigen. Insbesondere ist zu berücksichtigen, dass die in den Ausführungsbeispielen angegebenen Dickenabmessungen sehr stark vom Einsatzgebiet und von der Größe, also insbesondere vom erforderlichen Durchmesser der Bremsscheibe abhängen. Bei Bremsscheiben von 200 mm oder 300 mm Durchmesser, wie sie für den Schwerlast- und Bahnverkehr geplant sind, sind dann auch entsprechend größere Dicken der Bremsscheibe erforderlich.

Um die Bremsscheibe 9 drehfest aber axial verschiebbar auf einer zu bremsenden Welle, beispielsweise auf einer zu bremsenden Welle eines Antriebs anzuordnen, ist die Innenumfangsfläche der Durchgangsöffnung 13 mit einer Verzahnung 16 versehen, die in eine entsprechende Verzahnung auf einer zu bremsenden Welle eingreift.

Anstelle der dargestellten Verzahnung zur drehfesten Lagerung der Bremsscheibe 9 auf der Welle 21, kann auch jede andere bekannte unrunde Form gewählt werden. Zum Beispiel kann die Welle einen als Vierkant oder abgeplattet und mit Axialfeder ausgebildeten Wellenstummel aufweisen, auf den die Bremsscheibe dann mit einer entsprechenden quadratischen Öffnung oder einer abgeplatteten Öffnung mit Gegennut aufgesetzt wird.

Der Träger 10 ist aus einem fasergefüllten, hochfestem Reibmaterial hergestellt, wie es beispielsweise in der DE 30 46 696 angegeben ist.

Der Metallring 11. der als einzelner Außenring ausgebildet ist, wird bei der Herstellung der Bremsscheibe in den Träger 12 so eingepresst wird, dass das Trägermaterial den Metallring zumindest teilweise überlappt, um eine formschlüssige Verbindung zwischen dem Metallring 11 und dem Träger 12 auszubilden, wie dies bei 17 in Figur 1 angedeutet ist. Bei einer Dicke des Flanschabschnitts von etwa 2,5 mm, kann der Metallring 11 beispielsweise ca. 1.25 mm dick sein. Insbesondere liegt die Dicke des Metallrings im Bereich von 2/3 bis 1/4 der Dicke der Bremsscheibe im Bereich des Metallrings 11. also hier im Bereich des Flanschabschnitts. Auch diese Abmessungen sind baugrößenabhängig.

Wie in Figur 2 dargestellt, weist der Metallring 11 an seinem Innenumfang 18 eine Mehrzahl von radial nach innen gerichteten Mitnehmerfortsätzen 19 auf, deren radial innen liegenden Spitzen 20 in der Draufsicht tropfenförmig ausgebildet sind. Zur Optimierung des Kraftflusses können auch andere geeignete Formen der erweiterten Spitzen vorgesehen sein, wie z.B. Kreise, Dreiecke, Vierecke, Rauten, Herzen, Ovale, oder dergleichen. Grundsätzlich kann sowohl die Anordnung als auch die Anzahl der Mitnehmerfortsätze 19 beliebig gewählt werden. Dabei können bei größeren Bremsscheibendurchmessern mehr Mitnehmerfortsätze vorgesehen sein, als bei kleineren Durchmessern. Bei der dargestellten Bremsscheibe mit einem Durchmesser von ca. 70 mm liegt die Anzahl der Mitnehmerfortsätze zweckmäßigerweise im Bereich von 2 bis 12, insbesondere zwischen 2 bis 7, und vorzugsweise bei 4, wobei diese dann auch bevorzugt in Umfangsrichtung gleichmäßig verteilt sind, so dass das dynamische Verhalten der Bremsscheibe sowohl bei Rotation als auch bei axialer Verschiebung optimiert ist.

Wie in Figur 1 weiter zu erkennen ist, weist der Träger 12 gegliedert durch die Mitnehmerfortsätze 19 des Metallrings 4 sektorförmig angeordnete Reibflächen 15 auf, die oberhalb der Oberfläche des Metallrings 11 liegend und bei 17 diesen überlappen. Obwohl grundsätzlich auch eine glatte Oberfläche der Reibfläche 15, also eine nichtunterteilte Reibfläche möglich ist, wird eine Reibfläche, die in einzelne Reibflächensegmente entsprechend dem Mitnehmerfortsätzen des Metallrings unterteilt ist, bevorzugt, da die Unterteilung der Reibfläche in einzelne Segmente zur Geräuschsminderung vorteilhaft ist.

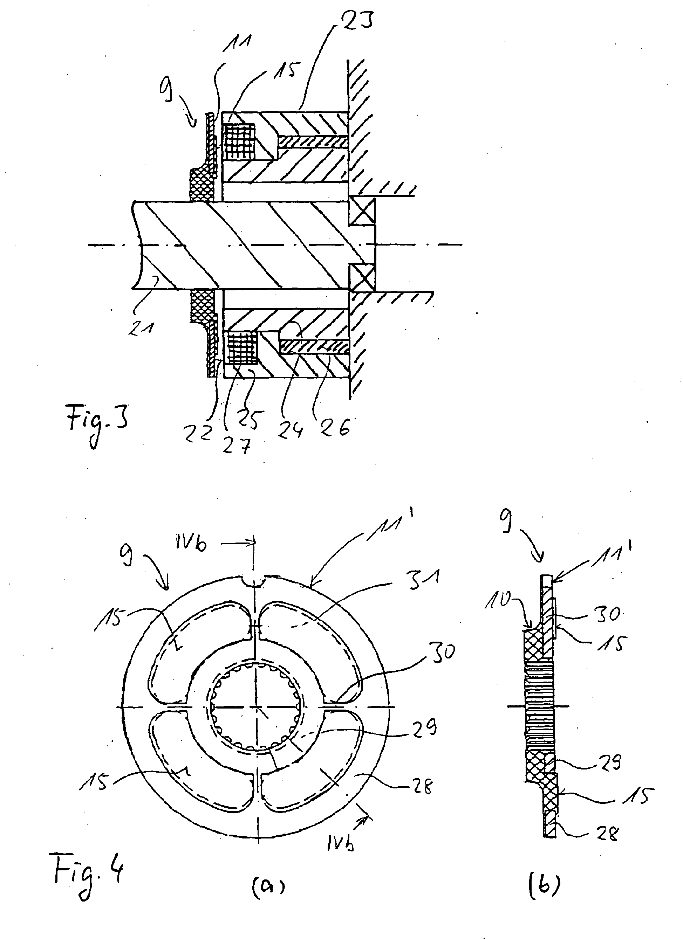

Wie in Figur 3 dargestellt ist, wird die erfindungsgemäße Bremsscheibe 9 drehfest, aber in Axialrichtung verschiebbar auf einer zu bremsenden Welle 21 so gelagert, dass der aus Stahlblech hergestellte Metallring 11 und die Reibflächen 15 einer entsprechenden Gegenreibfläche 22 einen drehfest gelagerten Bremskörper 23 einer Magnetbremse gegenüberliegen. Der Bremskörper 23 besteht beispielsweise aus einem Innenring 24, einem Außenring 25 und einem dazwischen angeordneten Permanentmagneten 26. Eine zwischen dem Innenring 24 und dem Außenring 25 im Bereich der Gegenreibfläche 22 der Magnetbremse gelagerte Magnetspule 27 dient zur Kompensation des von dem Permanentmagneten 26 erzeugten Magnetfeldes, so dass die Bremsscheibe 9 bei eingeschalteter Magnetspule 27 von der Gegenreibfläche 22 der Magnetbremse durch nicht dargestellte Mittel abgerückt werden kann. Sobald jedoch der Strom durch die Magnetspule 27 abgeschaltet wird, wird die Bremsscheibe 9 durch die auf die als Anker wirkende Metallscheibe 11 wirkenden Magnetkräfte in ihre Bremsstellung gezogen.

Die in Figur 4 dargestellte Bremsscheibe 9 weist einen Metallring 11' mit einem Außenring 28 und einem Innenring 29 auf, die über Stege 30 miteinander verbunden sind. Der Träger 10 aus Reibmaterial erstreckt sich zur Bildung von Reibflächen 15 durch die von Innenring 29, Außenring 28 und Stegen 30 begrenzten Fenster 31 des Metallrings 11' hindurch und bildet wiederum an den Rändern der Fenster 31 Überlappungen 17, die die formflüssige Halterung des Metallrings am Träger 10 verbessern.

Anstelle oder zusätzlich zum Formschluss kann zur Halterung des Metallrings 11, 11' am Träger 10 ein Stoffschluss vorgesehen sein. Um den Stoffschluss zu verbessern und die Haftung zwischen dem vorzugsweise aus Stahlblech bestehenden Metallring 11, 11' und Träger 10 zu erhöhen kann ein Haftvermittler vorgesehen sein.

Die Anzahl der Stege 30 zwischen Innen- und Außenring 29, 28 beim Metallring 11' gemäß Figur 4 kann ebenso wie die Anzahl der Mitnehmerfortsätze insbesondere unter Berücksichtigung des Durchmessers der Bremsscheibe oder ihrer Umfangslänge im Bereich der Stege zwischen 1 und n beliebig gewählt werden, wobei beim dargestellten Ausführungsbeispiel mit einem Bremsscheibendurchmesser von etwa 70 mm die Anzahl der Stege im Bereich von 2 bis 12, vorzugsweise zwischen 2 und 7 liegen sollte.

Abschließend ist noch darauf hinzuweisen, dass der Metallring 11, 11' nicht nur au seinem Innenumfang, sondern auch an seinem Außenumfang mit Mitnehmerfortsätzen versehen sein kann, die die innenliegenden Mitnehmerfortsätze entweder ergänzen oder auch ersetzen. Werden die außen liegenden Mitnehmerfortsätze, die sich im Wesentlichen radial nach außen erstrecken, zusätzlich zu den innen liegenden Mitnehmerfortsätzen vorgesehen, so ist es zwar grundsätzlich denkbar, die Anzahl und Anordnung der außen liegenden Mitnehmerfortsätze unabhängig von der der innen liegenden zu wählen, jedoch ist es für eine Optimierung der Kraftübertragung zwischen Träger und Metallring zweckmäßig, die außen liegenden Mitnehmerfortsätze zu den innen liegenden auszurichten, wobei jedem innen liegenden Mitnehmerfortsatz ein, zwei oder mehr außen liegende Mitnehmerfortsätze zugeordnet sein können.

Werden nur außen liegende Mitnehmerfortsätze vorgesehen, so werden diese einzeln oder in Gruppen zusammengefasst, gleichmäßig über den Außenumfang des Metallrings verteilt. Die außen liegenden Mitnehmerforstätze werden also in der Ebene der Bremsscheibe symmetrisch zur Drehachse der Bremsscheibe angeordnet.

Obwohl bei den dargestellten Ausführungsformen der erfindungsgemäßen Bremsscheibe die innen liegenden Mitnehmerfortsätze oder Stege einzeln umfangsmäßig gleichmäßig verteilt angeordnet sind, ist es auch bei den innen liegenden Mitnehmerfortsätzen möglich, anstelle von beispielsweise vier einzelnen Mitnehmerfortsätze auch vier Gruppen aus jeweils zwei, drei oder mehr Mitnehmerfortsätzen oder Stegen vorzusehen, die dann zur Vermeidung einer Umwucht symmetrisch zur Drehachse zur Bremsscheibe liegen.

## Patentansprüche

1. Bremsscheibe (9) mit:
- einem kreisscheibenförmige Träger (10) aus Reibmaterial, der eine zentrale Durchgangsöffnung (13) aufweist, und
- einem konzentrisch daran angeordneten Metallring (11, 11'),
**dadurch gekennzeichnet, dass**
- der Metallring (11, 11') in den Träger (10) eingepresst ist.

2. Bremsscheibe nach Anspruch 1, **dadurch gekennzeichnet, dass** der Metallring (11, 11') stoffschlüssig am Träger (10) gehalten ist.

3. Bremsscheibe nach Anspruch 2, **dadurch gekennzeichnet, dass** der Metallring (11, 11') unter Verwendung eines Haftvermittlers am Träger (10) gehalten ist.

4. Bremsscheibe nach Anspruch 1, 2 oder 3, **dadurch gekennzeichnet, dass** der Metallring (11, 11') formschlüssig am Träger (10) gehalten ist.

5. Bremsscheibe nach einem der vorstehenden Ansprüche, **dadurch gekennzeichnet, dass** der aus einem Außenring bestehende Metallring (11) an seinem Innenumfang einen oder mehrere radial nach Innen gerichtete Mitnehmerfortsätze (19) aufweist.

6. Bremsscheibe nach Anspruch 5, **dadurch gekennzeichnet, dass** der oder die Mitnehmerfortsätze (19) zur Optimierung des Kraftflusses in der Draufsicht erweiterte Spitzen (20) aufweisen, die in der Draufsicht vorzugsweise tropfenförmig, kreisförmig, elliptisch oder polygonal sind.

7. Bremsscheibe nach einem der Ansprüche 1 bis 4, **dadurch gekennzeichnet, dass** der Metallring (11') aus zumindest einem Innenring (29) und einem Außenring (28) besteht, die über einen oder mehrere Stege (30) miteinander verbunden sind.

8. Bremsscheibe nach einem der Ansprüche 5 bis 7, **dadurch gekennzeichnet, dass** die Mitnehmerfortsätze (19) oder die Stege (30) umfangsmäßig gleichmäßig verteilt angeordnet sind.

9. Bremsscheibe nach einem der vorstehenden Ansprüche, **dadurch gekennzeichnet, dass** der Metallring (11, 11') aus magnetisierbarem Stahlblech besteht.

10. Bremsscheibe nach einem der vorstehenden Ansprüche, **dadurch gekennzeichnet, dass** der kreisscheibenförmige Träger (10) aus Reibmaterial einen zentralen Nabenabschnitt (12), in dem die Durchgangsöffnung (13) zur Aufnahme einer zu bremsenden Welle konzentrisch angeordnet ist, und einen, den Nabenabschnitt (12) konzentrisch umgebenden Flanschabschnitt (14) mit zumindest einer Reibfläche (15) aufweist.

11. Bremsscheibe nach Anspruch 10, **dadurch gekennzeichnet, dass** der Nabenabschnitt (12) eine axiale Dicke aufweist, die gleich der Dicke des Flanschabschnitts (14) ist, oder die größer als dessen Dicke ist.

12. Bremsscheibe nach Anspruch 10 oder 11, **dadurch gekennzeichnet, dass** die Innenumfangsfläche der Durchgangsöffnung (13) im Nabenabschnitt (12) mit Mitnahmemitteln zur drehfesten Lagerung auf einer zu bremsenden Welle (21) versehen ist, wobei die Mitnahmemittel vorzugsweise von einer Verzahnung (16) zur Aufnahme einer Wellenverzahnung auf der zu bremsenden Welle (21) gebildet sind.

13. Bremsscheibe nach einem der Ansprüche 10, 11 oder 12, **dadurch gekennzeichnet, dass** am Flanschabschnitt (14) zwei oder mehr axial über die Oberfläche des Metallrings (11, 11') segmentartig vorstehende Reibflächen (15) vorgesehen sind, wobei die Anzahl der segmentartigen Reibflächen (15) vorzugsweise der Anzahl der Mitnehmer (19) oder Stege (30) des Metallrings (11, 11') entspricht.

14. Bremsscheibe nach einem der vorstehenden Ansprüche, **dadurch gekennzeichnet, dass** der Träger (10) aus einem Fasergefüllten, hochfestem Reibmaterial hergestellt ist.

15. Bremsscheibe nach einem der vorstehenden Ansprüche, **dadurch gekennzeichnet, dass** der Metallring (11, 11') an seinem Außenumfang zwei oder mehr Mitnehmerfortsätze aufweist, die vorzugsweise symmetrisch zur Rotationsachse der Bremsscheibe angeordnet sind.

## Claims

1. Brake disk (9) comprising:
- a circular-disk-shaped support (10) made from friction material, which has a central passage (13), and
- a metal ring (11, 11'), disposed concentrically thereon,
**characterized in that**
- the metal ring (11, 11') is pressed into the support (10).

2. Brake disk according to claim 1, **characterized in that** the metal ring (11, 11') is adhesively held on the support (10).

3. Brake disk according to claim 2, **characterized in that** the metal ring (11, 11') is held on the support (10) using an adhesion promoter.

4. Brake disk according to claim 1, 2 or 3, **characterized in that** the metal ring (11, 11') is positively held on the support (10).

5. Brake disk according to anyone of the above claims, **characterized in that** the metal ring (11), consisting of an outer ring, on its inner circumference has one or several driver means appendages (19) arranged radially inwards.

6. Brake disk according to claim 5, **characterized in that** the driver means appendage(s) (19) so as to optimize the flow of force have tips (20) extended in the top plan view, which seen from above are preferably tear-shaped, circular, elliptical or polygonal.

7. Brake disk according to anyone of claims I to 4, **characterized in that** the metal ring (11') consists of at least one inner ring (29) and outer ring (28), which are connected together by one or several bars (30).

8. Brake disk according to anyone of claims 5 to 7, **characterized in that** the driver means appendages (19) or the bars (30) are circumferentially arranged with even distribution.

9. Brake disk according to anyone of the above claims, **characterized in that** the metal ring (11, 11') is produced from magnetic sheet steel.

10. Brake disk according to anyone of the above claims, **characterized in that** the circular disk-shaped support (10) made from friction material has a central hub section (12), in which the passage (13) is concentrically arranged for holding a shaft to be braked and a flange section (14), concentrically surrounding the hub section (12), with at least one friction surface (15).

11. Brake disk according to claim 10, **characterized in that** the hub section (12) has an axial thickness, which is equal to the thickness of the flange section (14) or which is greater than its thickness.

12. Brake disk according to claim 10 or 11, **characterized in that** the interior circumferential face of the passage (13) in the hub section (12) is provided with driver means for rotationally locked mounting on a shaft (21) to be braked, wherein the driver means are formed preferably by gear teeth (16) for receiving gear teeth on the shaft (21) to be braked.

13. Brake disk according to anyone of claims 10, 11 or 12, **characterized in that** two or several friction surfaces (15), axially projecting segment-like over the surface of the metal ring (11, 11'), are provided on the flange section (14), wherein the number of the segment-like friction surfaces (15) preferably corresponds to the number of the driver means (19) or bars (30) of the metal ring (11, 11').

14. Brake disk according to anyone of the above claims, **characterized in that** the support (10) is made from a fibre-filled, high-strength friction material.

15. Brake disk according to anyone of the above claims, **characterized in that** the metal ring (11, 11'), on its outer circumference, has two or several driver means appendages, which are preferably arranged symmetrically to the rotational axis of the brake disk.

## Revendications

1. Disque de frein (9) comprenant :
- un support en forme de disque circulaire (10) en matériau de friction, qui présente une ouverture traversante centrale (13), et
- une bague métallique (11, 11') agencée concentriquement sur ce support,
**caractérisé en ce que**
- la bague métallique (11, 11') est enfoncée à la presse dans le support (10).

2. Disque de frein selon la revendication 1, **caractérisé en ce que** la bague métallique (11, 11') est maintenue sur le support (10) par coopération de matières.

3. Disque de frein selon la revendication 2, **caractérisé en ce que** la bague métallique (11, 11') est maintenue sur le support (10) en utilisant un agent favorisant l'adhésion.

4. Disque de frein selon la revendication 1, 2 ou 3, **caractérisé en ce que** la bague métallique (11, 11') est maintenue sur le support (10) par coopération de formes.

5. Disque de frein selon l'une des revendications précédentes, **caractérisé en ce que** la bague métallique (11) constituée par une bague extérieure présente sur sa périphérie intérieure un ou plusieurs prolongements d'entraînement (17) dirigés radialement vers l'intérieur.

6. Disque de frein selon la revendication 5, **caractérisé en ce que** le ou les prolongements d'entraînement (19) comprend/comprennent, pour optimiser le trajet des forces, des pointes évasées en vue de dessus (20), qui sont en vue de dessus de préférence en forme de goutte d'eau, en forme de cercle, en forme elliptique ou polygonale.

7. Disque de frein selon l'une des revendications 1 à 4, **caractérisé en ce que** la bague métallique (11') est constituée par au moins une bague intérieure (29) et une bague extérieure (28), lesquelles sont reliées l'une à l'autre via une ou plusieurs barrettes (30).

8. Disque de frein selon l'une des revendications 5 à 7, **caractérisé en ce que** les prolongements d'entraînement (19) ou les barrettes (30) sont agencé(e)s de façon régulièrement répartie dans le sens de la périphérie.

9. Disque de frein selon l'une des revendications précédentes, **caractérisé en ce que** la bague métallique (11, 11') est formée en une tôle d'acier susceptible d'être aimantée.

10. Disque de frein selon l'une des revendications précédentes, **caractérisé en ce que** le support (10) en forme de disque circulaire en matériau de friction comprend un tronçon de moyeu central (12) dans lequel est ménagée de façon concentrique l'ouverture traversante (13) pour la réception d'un arbre à freiner, et un tronçon de bride (14), qui entoure de façon concentrique le tronçon de moyeu (12), avec au moins une surface de friction (15).

11. Disque de frein selon la revendication de 10, **caractérisé en ce que** le tronçon de moyeu (12) présente une épaisseur axiale qui est égale à l'épaisseur du tronçon de bride (14) ou qui est supérieure à son épaisseur.

12. Disque de frein selon la revendication 10 ou 11, **caractérisé en ce que** la surface périphérique intérieure de l'ouverture traversante (13) dans le tronçon de moyeu (12) est pourvue de moyens d'entraînement pour le montage solidaire en rotation sur un arbre à freiner (21), lesdits moyens d'entraînement étant de préférence formés par une denture (16) destinée à recevoir une denture sur l'arbre à freiner (21).

13. Disque de frein selon l'une des revendications 10, 11 ou 12, **caractérisé en ce que** deux ou plusieurs surfaces de friction (15) qui dépassent axialement au-delà de la surface de la bague métallique (11, 11') et semblables à des segments sont prévues sur le tronçon de bride (14), le nombre des surfaces de friction semblables à des segments (15) correspondant de préférence au nombre des éléments d'entraînement (19) ou des barrettes (30) de la bague métallique (11, 11').

14. Disque de frein selon l'une des revendications précédentes, **caractérisé en ce que** le support (10) est fabriqué en un matériau de friction hautement résistant, rempli de fibres.

15. Disque de frein selon l'une des revendications précédentes, **caractérisé en ce que** la bague métallique (11, 11') comporte à sa périphérie extérieure deux ou plusieurs prolongements d'entraînement, qui sont de préférence agencés symétriquement par rapport à l'axe de rotation du disque de frein.
